# EUROPEAN PATENT APPLICATION

(11) **EP 4 838 633 A1**
(43) Date of publication of application: **11.11.2026**
(21) Application number: 24923221.6
(22) Date of filing: 30.07.2024
(51) Int. Cl.: H01M 10/658

(54) **BATTERY AND ELECTRICAL APPARATUS**

(30) Priority: 08.02.2024 CN 202420290160 U
(71) Applicant: Contemporary Amperex Technology Co., Limited, Ningde, Fujian 352100 (CN)
(72) Inventor: WU, Kai, Ningde, Fujian 352100 (CN); HAN, Fengsheng, Ningde, Fujian 352100 (CN)
(74) Representative: Kraus & Lederer PartGmbB
(86) International application number: PCT/CN2024/108543
(87) International publication number: WO 2025/167006

(57) **Abstract**

The present invention relates to a battery and an electrical apparatus. The battery comprises a battery cell, and a composite heat insulation pad disposed on at least one side of the battery cell, the composite heat insulation pad comprises a first heat insulation layer, a composite phase change layer, and a second heat insulation layer which are arranged in a stacked manner, the composite phase change layer comprising a phase change material layer, and a packaging layer disposed surrounding the phase change material layer; the thickness of the composite phase change layer is 1 mm to 4 mm, and the thicknesses of each of the first heat insulation layer and the second heat insulation layer are independently 1 mm to 3 mm. Due to the stacked arrangement structure and thickness optimization of the first heat insulation layer, the composite phase change layer and the second heat insulation layer of the composite heat insulation pad, a better heat insulation effect is obtained, and the battery applying said composite heat insulation pad has good resistance to thermal runaway.

## Description

### CROSS-REFERENCE TO RELATED APPLICATIONS

This application claims priority to the Chinese Patent Application No. 2024202901603, filed with the China National Intellectual Property Administration on February 08, 2024 and entitled "BATTERY AND ELECTRIC APPARATUS", which is incorporated herein by reference in its entirety.

### TECHNICAL FIELD

This application relates to the field of battery technology, and in particular, to a battery and an electric apparatus.

### BACKGROUND

With the rapid development of new energy technologies, batteries are increasingly widely used in many fields, and increasingly higher requirements are imposed on battery performance. For example, increasingly higher requirements are imposed on the energy density of batteries.

However, a battery cell with a high energy density has high residual energy after thermal runaway. When one battery cell undergoes thermal runaway, its heat is continuously conducted from this battery cell to a battery cell adjacent thereto, thus causing thermal diffusion throughout the entire battery, and leading to serious damage to the entire battery. Therefore, how to retard battery thermal runaway is an urgent problem to be solved.

### SUMMARY

In view of this, it is necessary to provide a battery and an electric apparatus to address the problem of how to retard battery thermal runaway.

According to a first aspect, this application provides a battery including a battery cell and a composite thermal insulation pad disposed on at least one side of the battery cell, where the composite thermal insulation pad includes a first thermal insulation layer, a composite phase change layer, and a second thermal insulation layer that are stacked; the composite phase change layer includes a phase change material layer and an encapsulation layer disposed on an outer peripheral side of the phase change material layer; a thickness of the composite phase change layer is 1 mm to 4 mm; and thicknesses of the first thermal insulation layer and the second thermal insulation layer are each independently 1 mm to 3 mm.

In the battery using the composite thermal insulation pad, the composite thermal insulation pad is provided with both the first thermal insulation layer and the second thermal insulation layer, which can provide good thermal insulation. In addition, the composite phase change layer disposed between the first thermal insulation layer and the second thermal insulation layer can absorb heat transferred from the thermal insulation layers on two sides, thereby further improving the thermal insulation performance of the composite thermal insulation pad. Moreover, the phase change material layer is disposed in the encapsulation layer, so that the phase change material layer in the composite phase change layer is physically isolated from a thermal insulation layer on an outer side, thereby preventing the phase change material from diffusing into the thermal insulation layer to form a heat conduction path before the encapsulation layer fails, and making the structure of the thermal insulation layer and thermal insulation performance thereof remain unchanged. In addition, the thicknesses of the first thermal insulation layer, the second thermal insulation layer, and the composite phase change layer of the composite thermal insulation pad are optimized, so that the above composite thermal insulation pad can obtain better thermal insulation performance at a lower thickness. The battery using the composite thermal insulation pad has a good effect of retarding battery thermal runaway.

In some embodiments, the battery satisfies at least one of the following conditions:
(1) the thickness of the composite phase change layer is 1.5 mm to 3.5 mm; and
(2) the thicknesses of the first thermal insulation layer and the second thermal insulation layer are each independently 1 mm to 2.5 mm.

In some embodiments, the battery cell is a ternary lithium battery; the thickness of the composite phase change layer is 1.5 mm to 3.3 mm; and the thicknesses of the first thermal insulation layer and the second thermal insulation layer are each independently 1 mm to 2.5 mm.

In some embodiments, an atomic percentage of the nickel element in ternary elements of a ternary positive electrode material in the battery cell is greater than 0 and less than 50%; and the thicknesses of the first thermal insulation layer and the second thermal insulation layer are each independently 1 mm to 2 mm.

In some embodiments, the battery satisfies one of the following conditions:
(1) a capacity of the battery cell is less than 120 Ah, the thickness of the composite phase change layer is 1.5 mm, and the thicknesses of the first thermal insulation layer and the second thermal insulation layer are each independently 1 mm to 1.5 mm;
(2) a capacity of the battery cell is greater than or equal to 120 Ah and less than 215 Ah, the thickness of the composite phase change layer is 2.3 mm, and the thicknesses of the first thermal insulation layer and the second thermal insulation layer are each independently 1.5 mm to 2 mm; and
(3) a capacity of the battery cell is greater than or equal to 215 Ah and less than 260 Ah, the thickness of the composite phase change layer is 3.3 mm, and the thicknesses of the first thermal insulation layer and the second thermal insulation layer are each independently 1.5 mm to 2 mm.

In some embodiments, the atomic percentage of the nickel element in the ternary elements of the ternary positive electrode material in the battery cell is greater than or equal to 50% and less than 70%; the thickness of the composite phase change layer is 2.3 mm to 3.3 mm; and the thicknesses of the first thermal insulation layer and the second thermal insulation layer are each independently 1.5 mm to 2 mm.

In some embodiments, the battery satisfies one of the following conditions:
(1) the capacity of the battery cell is less than 150 Ah, and the thicknesses of the first thermal insulation layer and the second thermal insulation layer are each independently 1.5 mm;
(2) the capacity of the battery cell is greater than or equal to 150 Ah and less than 200 Ah, the thickness of the composite phase change layer is 3.3 mm, and the thicknesses of the first thermal insulation layer and the second thermal insulation layer are each independently 1.5 mm to 2 mm; and
(3) the capacity of the battery cell is greater than or equal to 200 Ah and less than 260 Ah, and the thicknesses of the first thermal insulation layer and the second thermal insulation layer are each independently 1.5 mm to 2 mm.

In some embodiments, the atomic percentage of the nickel element in the ternary elements of a ternary positive electrode material in the battery cell is greater than or equal to 70%.

In some embodiments, the battery satisfies one of the following conditions:
(1) the capacity of the battery cell is less than 100 Ah, the thickness of the composite phase change layer is 1.5 mm, and the thicknesses of the first thermal insulation layer and the second thermal insulation layer are each independently 1 mm to 1.5 mm;
(2) the capacity of the battery cell is greater than or equal to 100 Ah and less than 120 Ah, the thickness of the composite phase change layer is 2.3 mm to 3.3 mm, and the thicknesses of the first thermal insulation layer and the second thermal insulation layer are each independently 1 mm to 1.5 mm; and
(3) the capacity of the battery cell is greater than or equal to 120 Ah, the thickness of the composite phase change layer is 2.3 mm to 3.3 mm, and the thicknesses of the first thermal insulation layer and the second thermal insulation layer are each independently 2 mm to 2.5 mm.

In some embodiments, the battery cell is a lithium iron phosphate battery; the thickness of the composite phase change layer is 1.5 mm to 3.3 mm; and the thicknesses of the first thermal insulation layer and the second thermal insulation layer are each independently 1 mm to 2 mm.

In some embodiments, the battery satisfies one of the following conditions:
(1) the capacity of the battery cell is less than 160 Ah, the thickness of the composite phase change layer is 1.5 mm, and the thicknesses of the first thermal insulation layer and the second thermal insulation layer are each independently 1 mm to 1.5 mm;
(2) the capacity of the battery cell is greater than or equal to 160 Ah and less than 260 Ah, the thickness of the composite phase change layer is 1.5 mm to 2.3 mm, and the thicknesses of the first thermal insulation layer and the second thermal insulation layer are each independently 1 mm to 1.5 mm; and
(3) the capacity of the battery cell is greater than or equal to 260 Ah and less than 450 Ah, the thickness of the composite phase change layer is 2.3 mm to 3.3 mm, and the thicknesses of the first thermal insulation layer and the second thermal insulation layer are each independently 1.5 mm to 2 mm.

In some embodiments, the battery cell is a sodium-ion battery; the thickness of the composite phase change layer is 1.5 mm to 2.3 mm; and the thicknesses of the first thermal insulation layer and the second thermal insulation layer are each independently 1 mm to 2 mm.

In some embodiments, the battery satisfies one of the following conditions:
(1) the capacity of the battery cell is less than 93 Ah, the thickness of the composite phase change layer is 1.5 mm, and the thicknesses of the first thermal insulation layer and the second thermal insulation layer are each independently 1 mm to 1.5 mm;
(2) the capacity of the battery cell is greater than or equal to 93 Ah and less than 117 Ah, and the thicknesses of the first thermal insulation layer and the second thermal insulation layer are each independently 1 mm to 1.5 mm; and
(3) the capacity of the battery cell is greater than or equal to 117 Ah and less than 180 Ah, the thickness of the composite phase change layer is 1.5 mm, and the thicknesses of the first thermal insulation layer and the second thermal insulation layer are each independently 1.5 mm to 2 mm.

In some embodiments, a plurality of battery cells are provided, and the composite thermal insulation pad is disposed between at least two adjacent battery cells.

In some embodiments, the composite thermal insulation pad is disposed between large surfaces of two adjacent battery cells.

In some embodiments, edges of the first thermal insulation layer and the second thermal insulation layer are connected to each other to form an assembly cavity, and the composite phase change layer is located in the assembly cavity.

In some embodiments, a protrusion is formed at an edge of at least one side surface of at least one of the first thermal insulation layer and the second thermal insulation layer, and the protrusion encloses at least a portion of the assembly cavity.

In some embodiments, the composite thermal insulation pad further includes a first encapsulation frame and a second encapsulation frame; the first encapsulation frame is disposed on a side of the first thermal insulation layer; the second encapsulation frame is disposed on a side of the second thermal insulation layer; and the first encapsulation frame cooperates with the second encapsulation frame to fix the first thermal insulation layer, the composite phase change layer, and the second thermal insulation layer.

In some embodiments, the first encapsulation frame has a first limiting groove; the second encapsulation frame has a second limiting groove; and the first thermal insulation layer, the composite phase change layer, and the second thermal insulation layer are limited in a limiting space formed by the first limiting groove and the second limiting groove.

In some embodiments, the composite thermal insulation pad satisfies at least one of the following conditions:
(1) the composite thermal insulation pad further includes a first adhesive layer and a second adhesive layer, the first thermal insulation layer is connected to the encapsulation layer through the first adhesive layer, and the second thermal insulation layer is connected to the encapsulation layer through the second adhesive layer;
(2) the composite thermal insulation pad further includes a release adhesive layer, the release adhesive layer includes a third adhesive layer and a release film, the third adhesive layer is disposed on outer surfaces of the first thermal insulation layer and the second thermal insulation layer, and the release film is disposed on an outer surface of the third adhesive layer;
(3) the first thermal insulation layer and the second thermal insulation layer each include a ceramic material layer;
(4) the encapsulation layer includes an aluminum-plastic film or a polymer encapsulation film; and
(5) a thickness of the encapsulation layer is 0.1 mm to 0.3 mm.

In some embodiments, the battery cell includes a housing; and the housing satisfies at least one of the following features:
(1) a wall thickness of the housing is 0.5 mm to 0.8 mm;
(2) the housing is a cuboid housing; and
(3) the housing is an aluminum alloy housing.

In some embodiments, the battery cell includes a housing; the housing is a cuboid housing; the housing has an opening; an opening direction of the housing is a height direction of the housing; a height of the housing is 80 mm to 210 mm; a length of the housing is 90 mm to 240 mm; and a width of the housing is 20 mm to 80 mm.

According to a second aspect of this application, an electric apparatus is provided, including the battery according to any one of the above embodiments.

Details of one or more embodiments of this application are described in the following drawings and description. Other features, objects, and advantages of this application will become apparent from the description, drawings, and claims.

### BRIEF DESCRIPTION OF DRAWINGS

To describe the technical solutions in the embodiments of this application or the prior art more clearly, the following briefly describes the accompanying drawings required for describing the embodiments or prior art. Apparently, the accompanying drawings in the following description show merely the embodiments of this application, and those of ordinary skill in the art may still derive other drawings from the accompanying drawings without creative efforts.
FIG. 1 is a schematic structural diagram of a battery according to an embodiment of this application;
FIG. 2 is a schematic structural exploded view of a battery according to an embodiment of this application;
FIG. 3 is a schematic cross-sectional structural diagram of a composite thermal insulation pad according to an embodiment of this application;
FIG. 4 is a schematic cross-sectional structural diagram of a composite thermal insulation pad according to another embodiment of this application;
FIG. 5 is a schematic cross-sectional structural diagram of a composite thermal insulation pad according to another embodiment of this application;
FIG. 6 is a schematic cross-sectional structural diagram of a composite thermal insulation pad according to another embodiment of this application;
FIG. 7 is a schematic three-dimensional structural diagram of a composite thermal insulation pad according to another embodiment of this application;
FIG. 8 is a schematic cross-sectional diagram of the composite thermal insulation pad shown in FIG. 7 along direction A-A;
FIG. 9 is a cross-sectional exploded view of the composite thermal insulation pad shown in FIG. 8;
FIG. 10 is a schematic cross-sectional structural diagram of a composite thermal insulation pad according to another embodiment of this application;
FIG. 11 is a schematic structural diagram of a battery cell in a battery according to an embodiment;
FIG. 12 is a schematic diagram of an electric apparatus using a battery as a power source according to an embodiment of this application;
FIG. 13 is a graph showing an experimentally measured curve of thermal insulation performance of battery 2 in Example 1 and a simulation test curve using a heat estimation model;
FIG. 14 is a graph showing an experimentally measured curve of thermal insulation performance of battery 3 in Example 1 and a simulation test curve using a heat estimation model;
FIG. 15 is a schematic flowchart of a test method according to an embodiment; and
FIG. 16 is an internal structure diagram of a computer device according to an embodiment.

Description of reference signs:
10. composite thermal insulation pad; 11. first thermal insulation layer; 12. second thermal insulation layer; 13. composite phase change layer; 131. phase change material layer; 132. encapsulation layer; 1321. encapsulation margin portion; 141. first encapsulation frame; 142. second encapsulation frame; 151. first adhesive layer; 152. second adhesive layer; 16. third thermal insulation layer;
20. battery cell; 21. housing; 22. electrode assembly; 23. cover plate;
30. battery; and
40. electric apparatus.

### DESCRIPTION OF EMBODIMENTS

To make the above objects, features, and advantages of this application more obvious and easier to understand, the specific embodiments of this application will be described in detail below with reference to the accompanying drawings. In the following description, many specific details are described to facilitate a full understanding of this application. However, this application can be implemented in many other ways different from those described herein, and those skilled in the art can make similar improvements without departing from the connotation of this application. Therefore, this application is not limited by the specific embodiments disclosed below.

In the description of this application, it should be understood that if the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like appear, the orientations or positional relationships indicated by these terms are based on the orientations or positional relationships shown in the drawings, and are merely for ease and brevity of description of this application rather than indicating or implying that the means or elements mentioned must have specific orientations or must be constructed or manipulated according to specific orientations, and therefore shall not be construed as any limitation on this application.

In addition, if the terms "first" and "second" appear, the terms are used for descriptive purposes only and cannot be understood as indicating or implying relative importance or implicitly indicating the number of indicated technical features. Thus, a feature defined as "first" or "second" may explicitly or implicitly include at least one of the features. In the description of this application, if the term "a plurality of" appears, "a plurality of" means at least two, such as two and three, unless otherwise clearly and specifically limited.

In this application, unless otherwise clearly specified and limited, if similar descriptions such as a first feature being "on" or "under" a second feature appear, it may mean that the first and second features are in direct contact with each other, or the first and second features are in indirect contact with each other through an intermediate medium. Moreover, the first feature being "above", "over", and "on" the second feature may mean that the first feature is directly above or obliquely above the second feature, or merely mean that the first feature is horizontally higher than the second feature. The first feature being "below", "under", and "beneath" the second feature may mean that the first feature is directly below or obliquely below the second feature, or merely mean that the first feature is horizontally lower than the second feature.

It should be noted that if an element is referred to as being "fixed to" or "disposed on" another element, the element may be provided directly on the another element or with an element possibly present therebetween. If an element is considered to be "connected to" another element, the element may be connected to the another element directly or with an element possibly present therebetween. If present, the terms "perpendicular", "horizontal", "upper", "lower", "left", "right", and similar expressions used in this application are for illustrative purposes only and do not indicate the only embodiment.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is an abbreviated representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Currently, from the perspective of market development, the application of batteries is becoming more extensive. Batteries, especially traction batteries, have been not only used in energy storage power supply systems such as hydroelectric power plants, thermal power plants, wind power plants, and solar power plants, but also widely used in electric transportation tools such as electric bicycles, electric motorcycles, and electric vehicles, and other fields. With the continuous expansion of the application field of traction batteries, the market demand is also continuously increasing.

A battery cell is the smallest unit that constitutes a battery. A battery may include one or more battery cells, and a plurality of battery cells may be connected in series, parallel, or series-parallel, where being connected in series-parallel means a combination of series and parallel connections of the plurality of battery cells.

After a plurality of battery cells are connected to each other and arranged in a certain order, the battery cells may be directly accommodated in a box and assembled to form a battery. A plurality of battery cells may alternatively be first assembled into a battery module, and then a plurality of battery modules are connected to each other to form an entirety, and the entirety formed by the battery modules is finally accommodated in the box to form a battery.

To solve the above problem of battery thermal runaway and reduce the degree and risk of damage to an entire battery, this application provides a battery to which a composite thermal insulation pad is applied, and a film layer thickness of the composite thermal insulation pad is optimized to obtain a better thermal insulation effect. Further, in this application, based on different systems of the battery cells, the film layer thickness of the composite thermal insulation pad is further optimized based on different capacities of the battery cells, thereby obtaining a better thermal insulation effect.

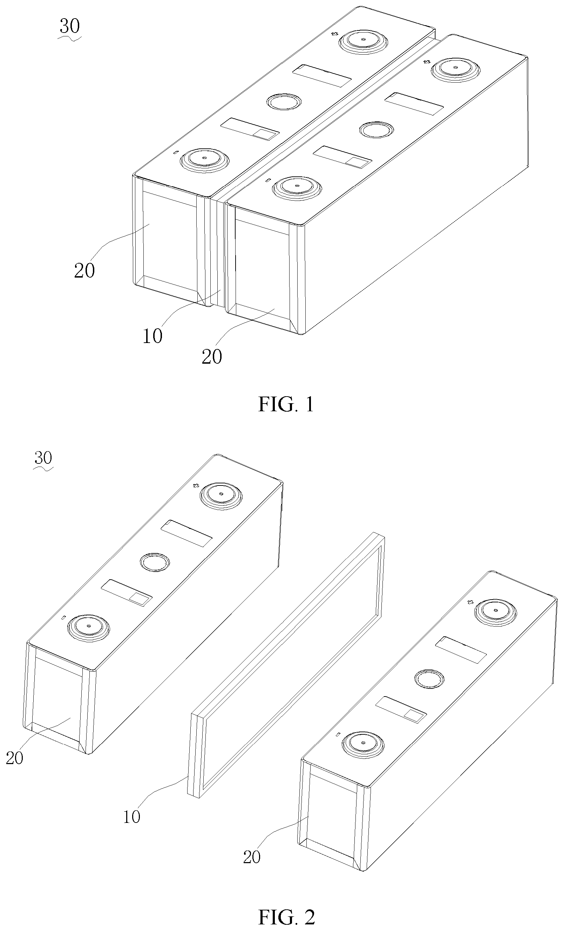

Referring to FIGs. 1 and 2, an embodiment of this application provides a battery 30 including a battery cell 20 and a composite thermal insulation pad 10 disposed on at least one side of the battery cell 20.

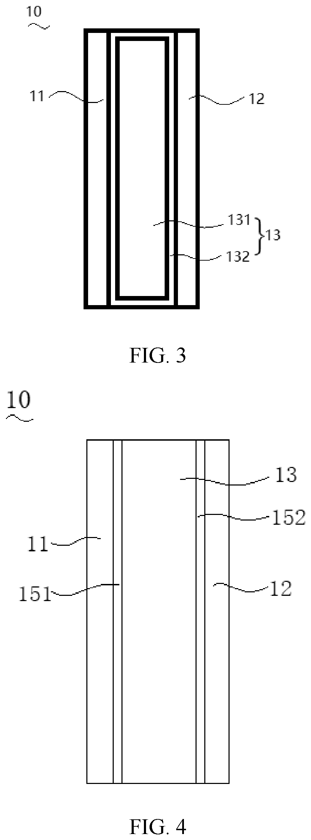

Referring to FIG. 3, the composite thermal insulation pad 10 includes a first thermal insulation layer 11, a composite phase change layer 13, and a second thermal insulation layer 12 that are stacked. The composite phase change layer 13 includes a phase change material layer 131 and an encapsulation layer 132 disposed on an outer peripheral side of the phase change material layer 131. A thickness of the composite phase change layer 13 is 1 mm to 4 mm. Thicknesses of the first thermal insulation layer 11 and the second thermal insulation layer 12 are each independently 1 mm to 3 mm.

In the battery 30 using the above composite thermal insulation pad 10, the composite thermal insulation pad 10 is provided with both the first thermal insulation layer 11 and the second thermal insulation layer 12, which can provide good thermal insulation. In addition, the composite phase change layer 13 disposed between the first thermal insulation layer 11 and the second thermal insulation layer 12 can absorb heat transferred from the thermal insulation layers on two sides, thereby further improving the thermal insulation performance of the composite thermal insulation pad 10. Moreover, the phase change material layer 131 is disposed in the encapsulation layer 132, so that the phase change material layer 131 in the composite phase change layer 13 is physically isolated from a thermal insulation layer on an outer side, thereby preventing the phase change material from diffusing into the thermal insulation layer to form a heat conduction path before the encapsulation layer 132 fails, and making the structure of the thermal insulation layer and thermal insulation performance thereof remain unchanged. In this way, the above composite thermal insulation pad 10 has better thermal insulation performance. In addition, the thicknesses of the first thermal insulation layer 11, the second thermal insulation layer 12, and the composite phase change layer 13 of the composite thermal insulation pad 10 are optimized, so that the composite thermal insulation pad 10 can obtain a better thermal insulation effect at a lower thickness. The battery using the composite thermal insulation pad 10 has a good effect of retarding battery thermal runaway.

In the battery 30 using the above composite thermal insulation pad 10, when the battery 30 is in a normal working state, the first thermal insulation layer 11 and the second thermal insulation layer 12 located on the outer side mainly play a thermal insulation role; when the battery 30 generates abnormal heat and a large amount of heat is conducted to the phase change material layer 131 in the composite phase change layer 13, the phase change material layer 131 therein can absorb a large amount of heat and then undergo a phase change; when the phase change material layer 131 continues to absorb heat, the phase change material therein is converted into a gaseous state to burst the encapsulation layer 132, and a high-temperature gas is discharged, thereby causing the encapsulation of the encapsulation layer 132 to fail. In this case, the first thermal insulation layer 11 and the second thermal insulation layer 12 continue to play a thermal insulation role.

In this application, unless otherwise stated, "battery cell" refers to a basic unit capable of realizing mutual conversion between chemical energy and electrical energy. Further, the battery cell typically includes at least a positive electrode plate, a negative electrode plate, and an electrolyte. During charging and discharging of the battery, active ions are intercalated and deintercalated back and forth between the positive electrode plate and the negative electrode plate. The electrolyte plays a role in conducting active ions between the positive electrode plate and the negative electrode plate.

As an example, the thickness of the composite phase change layer 13 may be 1 mm, 1.5 mm, 2 mm, 2.3 mm, 2.5 mm, 3 mm, or 3.5 mm. It can be understood that the thickness of the composite phase change layer 13 refers to the sum of the thicknesses of the encapsulation layers 132 on two sides and the thickness of the phase change material layer 131 in a film layer stacking direction of the composite thermal insulation pad 10, that is, a thickness direction. In some embodiments, the thickness may alternatively be a range formed by any two of the above point values as end values, and the same applies hereinafter. For example, the thickness may be 1.5 mm to 3.5 mm.

As an example, the thicknesses of the first thermal insulation layer 11 and the second thermal insulation layer 12 are each independently 1 mm, 1.5 mm, 2 mm, 2.3 mm, or 2.5 mm. In some embodiments, the thickness may alternatively be 1 mm to 2.5 mm.

Further, in this application, based on different systems of the battery cells 20, a film layer thickness of the composite thermal insulation pad 10 is optimized to obtain a better thermal insulation effect. The systems of the battery cells 20 include a ternary lithium battery (referred to as ternary in Table 1), a lithium iron phosphate battery (LFP battery) and a sodium-ion battery (Na-ion battery). The details are shown in Table 1 below.

**Table 1**

| Battery cell | | Capacity | Thickness of composite phase change layer | Thickness of each of first thermal insulation layer and second thermal insulation layer |
|---|---|---|---|---|
| | Ni content < 50% | Capacity < 120 Ah | 1.5 mm | 1 mm to 1.5 mm |
| | | 120 Ah ≤ capacity < 215 Ah | 2.3 mm | 1.5 mm to 2 mm |
| | | 215 Ah ≤ capacity < 260 Ah | 3.3 mm | 1.5 mm to 2 mm |
| | 50% ≤ Ni content < 70% | Capacity < 150 Ah | 2.3 mm to 3.3 mm | 1.5 mm |
| Ternary | | 150 Ah ≤ capacity < 200 Ah | 2.3 mm to 3.3 mm | 1.5 mm to 2 mm |
| | | 200 Ah ≤ capacity < 260 Ah | 2.3 mm to 3.3 mm | 1.5 mm to 2.5 mm |
| | Ni content ≥ 70% | Capacity < 100 Ah | 1.5 mm | 1 mm to 1.5 mm |
| | | 100 Ah ≤ capacity < 120 Ah | 2.3 mm to 3.3 mm | 1 mm to 1.5 mm |
| | | Capacity ≥ 120 Ah | 2.3 mm to 3.3 mm | 2 mm to 2.5 mm |
| LFP | | Capacity < 160 Ah | 1.5 mm | 1 mm to 1.5 mm |
| | | 160 Ah ≤ capacity < 260 Ah | 1.5 mm to 2.3 mm | 1 mm to 1.5 mm |
| | | 260 Ah ≤ capacity < 450 Ah | 2.3 mm to 3.3 mm | 1.5 mm to 2 mm |
| Na-ion battery | | Capacity < 93 Ah | 1.5 mm | 1 mm to 1.5 mm |
| | | 93 Ah ≤ capacity < 117 Ah | 1.5 mm to 2.3 mm | 1 mm to 1.5 mm |
| | | 117 Ah ≤ capacity < 180 Ah | 1.5 mm | 1.5 mm to 2 mm |

Referring to Table 1, in some embodiments, the battery cell 20 is a ternary lithium battery, the thickness of the composite phase change layer 13 is 1.5 mm to 3.3 mm, and the thicknesses of the first thermal insulation layer 11 and the second thermal insulation layer 12 are each independently 1 mm to 2.5 mm.

In the ternary lithium battery, the film layer thickness of the composite thermal insulation pad 10 is further optimized based on different nickel contents in a ternary positive electrode material, thereby obtaining a better thermal insulation effect. It can be understood that the Ni content in the ternary positive electrode material in Table 1 refers to an atomic percentage of the nickel element in ternary elements. Taking an NCM811 ternary positive electrode material as an example, the nickel content therein refers to the atomic percentage of the nickel element in nickel-cobalt-manganese ternary elements, which is 80%.

The ternary positive electrode material in this application contains the nickel element, which includes but is not limited to at least one of lithium nickel cobalt manganese oxide (hereinafter referred to as "NCM") or lithium nickel cobalt aluminum oxide (hereinafter referred to as "NCA"). Non-limiting examples of lithium nickel cobalt manganese oxide (NCM) may include LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), and the like. Non-limiting examples of lithium nickel cobalt aluminum oxide (NCA) may include LiNi_{0.8}Co_{0.15}Al_{0.05}O₂.

In some embodiments, an atomic percentage of the nickel element in ternary elements of a ternary positive electrode material in the battery cell 20 is greater than 0 and less than 50%. Typically, the ternary positive electrode material is considered to be a low-nickel ternary system. The thickness of the composite phase change layer 13 is 1.5 mm to 3.3 mm. The thicknesses of the first thermal insulation layer 11 and the second thermal insulation layer 12 are each independently 1 mm to 2 mm.

Further, in this application, when the systems of the battery cells 20 are the same, the film layer thickness of the composite thermal insulation pad 10 is optimized based on different capacities of the battery cells 20, thereby obtaining a better thermal insulation effect. Specifically, the battery cell 20 is a ternary lithium battery, the atomic percentage of the nickel element in the ternary elements of the ternary positive electrode material in the battery cell 20 is greater than 0 and less than 50%. Based on different capacities of the battery cells 20, three solutions (1) to (3) are described below.
(1) The capacity of the battery cell 20 is less than 120 Ah, the thickness of the composite phase change layer 13 is 1.5 mm, and the thicknesses of the first thermal insulation layer 11 and the second thermal insulation layer 12 are each independently 1 mm to 1.5 mm.
(2) The capacity of the battery cell 20 is greater than or equal to 120 Ah and less than 215 Ah, the thickness of the composite phase change layer 13 is 2.3 mm, and the thicknesses of the first thermal insulation layer 11 and the second thermal insulation layer 12 are each independently 1.5 mm to 2 mm.
(3) The capacity of the battery cell 20 is greater than or equal to 215 Ah and less than 260 Ah, the thickness of the composite phase change layer 13 is 3.3 mm, and the thicknesses of the first thermal insulation layer 11 and the second thermal insulation layer 12 are each independently 1.5 mm to 2 mm.

In this way, as the capacity of the battery cell 20 increases, the thickness of the composite phase change layer 13 increases accordingly, which can significantly improve the thermal insulation effect of the composite thermal insulation pad 10. In addition, as compared with a pure thermal insulation layer, the thermal insulation effect of the composite thermal insulation pad 10 of this application is greatly improved under the same total thickness, thereby helping to reduce the volume occupied by the battery.

In some embodiments, the atomic percentage of the nickel element in the ternary elements of the ternary positive electrode material in the battery cell 20 is greater than or equal to 50% and less than 70%. Typically, the ternary positive electrode material is considered to be a medium-nickel ternary system. The thickness of the composite phase change layer 13 is 2.3 mm to 3.3 mm. The thicknesses of the first thermal insulation layer 11 and the second thermal insulation layer 12 are each independently 1.5 mm to 2.5 mm.

Further, in this application, when the systems of the battery cells 20 are the same, the film layer thickness of the composite thermal insulation pad 10 is optimized based on different capacities of the battery cells 20, thereby obtaining a better thermal insulation effect. Specifically, the battery cell 20 is a ternary lithium battery, the atomic percentage of the nickel element in the ternary elements of the ternary positive electrode material in the battery cell 20 is greater than or equal to 50% and less than 70%. Based on different capacities of the battery cells 20, three solutions (1) to (3) are described below.
(1) The capacity of the battery cell 20 is less than 150 Ah, the thickness of the composite phase change layer 13 is 2.3 mm to 3.3 mm, and the thicknesses of the first thermal insulation layer 11 and the second thermal insulation layer 12 are each independently 1.5 mm.
(2) The capacity of the battery cell 20 is greater than or equal to 150 Ah and less than 200 Ah, the thickness of the composite phase change layer 13 is 2.3 mm to 3.3 mm, and the thicknesses of the first thermal insulation layer 11 and the second thermal insulation layer 12 are each independently 1.5 mm to 2 mm.
(3) The capacity of the battery cell 20 is greater than or equal to 200 Ah and less than 260 Ah, the thickness of the composite phase change layer 13 is 2.3 mm to 3.3 mm, and the thicknesses of the first thermal insulation layer 11 and the second thermal insulation layer 12 are each independently 1.5 mm to 2.5 mm.

Further, in this application, when the systems of the battery cells 20 are the same, the film layer thickness of the composite thermal insulation pad 10 is optimized based on different capacities of the battery cells 20, thereby obtaining a better thermal insulation effect. The atomic percentage of the nickel element in the ternary elements of the ternary positive electrode material in the battery cell 20 is greater than or equal to 70%. Typically, the ternary positive electrode material is considered to be a high-nickel ternary system. The percentage of nickel is less than 100%. The thickness of the composite phase change layer 13 is 1.5 mm to 3.3 mm. The thicknesses of the first thermal insulation layer 11 and the second thermal insulation layer 12 are each independently 1 mm to 2.5 mm.

Further, in this application, when the systems of the battery cells 20 are the same, the film layer thickness of the composite thermal insulation pad is optimized based on different capacities of the battery cells 20, thereby obtaining a better thermal insulation effect. Specifically, the battery cell 20 is a ternary lithium battery. The atomic percentage of the nickel element in the ternary elements of the ternary positive electrode material in the battery cell 20 is greater than or equal to 70%. Based on different capacities of the battery cells 20, three solutions (1) to (3) are described below.
(1) The capacity of the battery cell 20 is less than 100 Ah, the thickness of the composite phase change layer 13 is 1.5 mm, and the thicknesses of the first thermal insulation layer 11 and the second thermal insulation layer 12 are each independently 1 mm to 1.5 mm.
(2) The capacity of the battery cell 20 is greater than or equal to 100 Ah and less than 120 Ah, the thickness of the composite phase change layer 13 is 2.3 mm to 3.3 mm, and the thicknesses of the first thermal insulation layer 11 and the second thermal insulation layer 12 are each independently 1 mm to 1.5 mm.
(3) The capacity of the battery cell 20 is greater than or equal to 120 Ah, the thickness of the composite phase change layer 13 is 2.3 mm to 3.3 mm, and the thicknesses of the first thermal insulation layer 11 and the second thermal insulation layer 12 are each independently 2 mm to 2.5 mm.

In the solutions (1) and (2), as the capacity of the battery cell 20 increases, the thermal insulation effect of the composite thermal insulation pad 10 can be significantly improved by increasing the thickness of the composite phase change layer 13. In addition, as compared with a pure thermal insulation layer, the thermal insulation effect of the composite thermal insulation pad 10 of this application is greatly improved under the same total thickness, thereby helping to reduce the volume occupied by the battery. In the solutions (2) and (3), as the capacity of the battery cell 20 continues to increase, the cost of continuing to increase the thickness of the composite phase change layer 13 is too high and the effect is not obvious. In this case, the thicknesses of the first thermal insulation layer 11 and the second thermal insulation layer 12 may be further increased, thereby improving the thermal insulation effect of the composite thermal insulation pad 10.

In some embodiments, the battery cell 20 is a lithium iron phosphate battery. The thickness of the composite phase change layer 13 is 1.5 mm to 3.3 mm. The thicknesses of the first thermal insulation layer 11 and the second thermal insulation layer 12 are each independently 1 mm to 2 mm.

Further, in this application, when the systems of the battery cells 20 are the same, the film layer thickness of the composite thermal insulation pad 10 is optimized based on different capacities of the battery cells 20, thereby obtaining a better thermal insulation effect. Specifically, the battery cell 20 is a lithium iron phosphate battery. Based on different capacities of the battery cells 20, three solutions (1) to (3) are described below.
(1) The capacity of the battery cell 20 is less than 160 Ah, the thickness of the composite phase change layer 13 is 1.5 mm, and the thicknesses of the first thermal insulation layer 11 and the second thermal insulation layer 12 are each independently 1 mm to 1.5 mm.
(2) The capacity of the battery cell 20 is greater than or equal to 160 Ah and less than 260 Ah, the thickness of the composite phase change layer 13 is 1.5 mm to 2.3 mm, and the thicknesses of the first thermal insulation layer 11 and the second thermal insulation layer 12 are each independently 1 mm to 1.5 mm.
(3) The capacity of the battery cell 20 is greater than or equal to 260 Ah and less than 450 Ah, the thickness of the composite phase change layer 13 is 2.3 mm to 3.3 mm, and the thicknesses of the first thermal insulation layer 11 and the second thermal insulation layer 12 are each independently 1.5 mm to 2 mm.

In the solutions (1) and (2), as the capacity of the battery cell 20 increases, the thermal insulation effect of the composite thermal insulation pad 10 can be significantly improved by increasing the thickness of the composite phase change layer 13. In addition, as compared with a pure thermal insulation layer, the thermal insulation effect of the composite thermal insulation pad 10 of this application is greatly improved under the same total thickness, thereby helping to reduce the volume occupied by the battery. In the solutions (2) and (3), as the capacity of the battery cell 20 continues to increase, the thicknesses of the composite phase change layer 13, the first thermal insulation layer 11, and the second thermal insulation layer 12 may be further increased, thereby improving the thermal insulation effect of the composite thermal insulation pad 10.

In some embodiments, the battery cell 20 is a sodium-ion battery. The thickness of the composite phase change layer 13 is 1.5 mm to 2.3 mm. The thicknesses of the first thermal insulation layer 11 and the second thermal insulation layer 12 are each independently 1 mm to 2 mm.

A sodium-ion battery contains a sodium-ion active material. As a non-limiting example of the sodium-ion active material, the sodium-ion active material may include one or more of the following materials: one or more of a sodium transition metal oxide, a polyanionic compound, and a Prussian blue compound. However, this application is not limited to these materials, and other conventionally known materials that can be used as positive electrode active materials for sodium-ion batteries may also be used.

Further, in this application, when the systems of the battery cells 20 are the same, the film layer thickness of the composite thermal insulation pad 10 is optimized based on different capacities of the battery cells 20, thereby obtaining a better thermal insulation effect. Specifically, the battery cell 20 is a sodium-ion battery. Based on different capacities of the battery cells 20, three solutions (1) to (3) are described below.
(1) The capacity of the battery cell 20 is less than 93 Ah, the thickness of the composite phase change layer 13 is 1.5 mm, and the thicknesses of the first thermal insulation layer 11 and the second thermal insulation layer 12 are each independently 1 mm to 1.5 mm.
(2) The capacity of the battery cell 20 is greater than or equal to 93 Ah and less than 117 Ah, the thickness of the composite phase change layer 13 is 1.5 mm to 2.3 mm, and the thicknesses of the first thermal insulation layer 11 and the second thermal insulation layer 12 are each independently 1 mm to 1.5 mm.
(3) The capacity of the battery cell 20 is greater than or equal to 117 Ah and less than 180 Ah, the thickness of the composite phase change layer 13 is 1.5 mm, and the thicknesses of the first thermal insulation layer 11 and the second thermal insulation layer 12 are each independently 1.5 mm to 2 mm.

In the solutions (1) and (2), as the capacity of the battery cell 20 increases, the thermal insulation effect of the composite thermal insulation pad 10 can be significantly improved by increasing the thickness of the composite phase change layer 13. In addition, as compared with a pure thermal insulation layer, the thermal insulation effect of the composite thermal insulation pad 10 of this application is greatly improved under the same total thickness, thereby helping to reduce the volume occupied by the battery. In the solutions (2) and (3), as the capacity of the battery cell 20 continues to increase, the thicknesses of the first thermal insulation layer 11 and the second thermal insulation layer 12 may be further increased, thereby improving the thermal insulation effect of the composite thermal insulation pad 10.

Conventional technology is limited by the structure, and the phase change material can only use a solid phase change material. However, the heat absorption capacity of the solid phase change material is limited. In the above composite thermal insulation pad 10, because its phase change material layer 131 is disposed in an encapsulation cavity of the encapsulation layer 132, the phase change material layer 131 is physically isolated from the thermal insulation layer on the outer side. Therefore, the phase change material of the phase change material layer 131 may be a solid phase change material, a liquid phase change material, or a solid-liquid mixed phase change material. Optionally, the phase change material includes but is not limited to crystalline water and salt, phase change molten salt, paraffin, silicone oil, silica-alumina sol, fatty acids, alcohols, and other substances that can undergo phase change and absorb heat, and its application range is wider.

In addition, because the phase change material of the phase change material layer 131 will undergo a phase change, for example, a solid phase change material at room temperature will turn into a liquid state after absorbing heat, the encapsulation layer 132 can also play a role in isolating the liquid phase change material after the phase change from the thermal insulation layer on the outer side. In addition, some preparation processes inevitably cause the phase change material to carry moisture. The structure in which the phase change material layer 131 is disposed in the encapsulation cavity of the encapsulation layer 132 can avoid the adverse effects caused by moisture overflow on the battery.

Referring to FIG. 4, in some embodiments, the composite thermal insulation pad 10 further includes a first adhesive layer 151 and a second adhesive layer 152. The first thermal insulation layer 11 is connected to the encapsulation layer 132 through the first adhesive layer 151. The second thermal insulation layer 12 is connected to the encapsulation layer 132 through the second adhesive layer 152. In this way, the first thermal insulation layer 11, the composite phase change layer 13, and the second thermal insulation layer 12 of the composite thermal insulation pad 10 are connected and fixed in a thickness direction through the adhesive layers.

Further, materials of the first adhesive layer 151 and the second adhesive layer 152 are each independently a silicone adhesive layer, and thicknesses are each independently 0.04 mm to 0.06 mm. The silicone adhesive layer is resistant to high temperature and has high structural strength. A peel force of the prepared composite thermal insulation pad is greater than 10 N/cm. The peel force can be measured by using a tensile meter to pull two sides of the composite thermal insulation pad and applying a force perpendicular to the composite thermal insulation pad at 90° outward on the two sides of the composite thermal insulation pad. The tensile meter will display the tensile force when the composite thermal insulation pad is peeled off, and the peel force is obtained according to the tensile force.

In some embodiments, the composite thermal insulation pad 10 further includes a release adhesive layer (not shown in the figure). The release adhesive layer includes a third adhesive layer and a release film. The third adhesive layer is disposed on outer surfaces of the first thermal insulation layer 11 and the second thermal insulation layer 12. The release film is disposed on an outer surface of the third adhesive layer. In this way, when the composite thermal insulation pad 10 needs to be fixed at a target position, such as a target battery cell, the release film on a surface of the release adhesive layer on the composite thermal insulation pad 10 is removed, and the composite thermal insulation pad 10 is simply and conveniently fixed to the target position by bonding with the third adhesive layer, which can play a role in fixing the composite thermal insulation pad 10.

As an example, the outer surfaces of the first thermal insulation layer 11 and the second thermal insulation layer 12 of the composite thermal insulation pad 10 are each provided with the above release adhesive layer. When used, the composite thermal insulation pad 10 may be bonded and fixed to two objects through the release adhesive layers on two sides, for example, bonded and fixed to two adjacent battery cells respectively, so as to dispose the composite thermal insulation pad 10 between the two adjacent battery cells.

As shown in FIG. 4, the first thermal insulation layer 11 and the second thermal insulation layer 12 are physically isolated by the composite phase change layer 13. In other words, edges of the first thermal insulation layer 11 and the second thermal insulation layer 12 are not connected to each other.

In some embodiments, length dimensions and width dimensions of the first thermal insulation layer 11 and the second thermal insulation layer 12 are respectively adapted to a length dimension and width dimension of the composite phase change layer 13. In some other embodiments, at least one of the length dimensions and the width dimensions of the first thermal insulation layer 11 and the second thermal insulation layer 12 is greater than the corresponding length dimension or width dimension of the composite phase change layer 13.

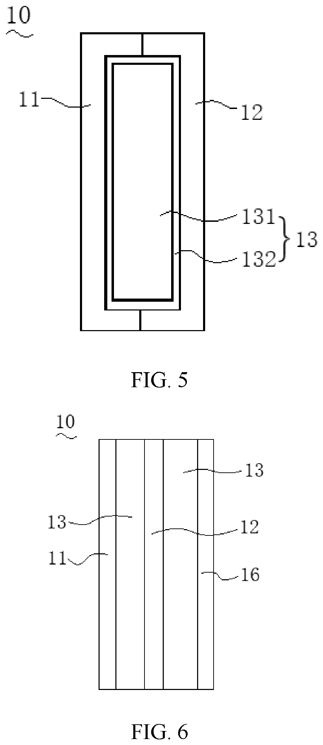

Referring to FIG. 5, in some embodiments, the edges of the first thermal insulation layer 11 and the second thermal insulation layer 12 are connected to each other to form an assembly cavity, and the composite phase change layer 13 is located in the assembly cavity. Through this structural arrangement, the composite phase change layer 13 is disposed in the first thermal insulation layer 11 and the second thermal insulation layer 12, which reduces the risk of the composite phase change layer 13 falling off.

Further, a protrusion is formed at an edge of at least one side surface of at least one of the first thermal insulation layer 11 and the second thermal insulation layer 12, and the protrusion encloses at least a portion of the assembly cavity. As an example, a protrusion is formed at an edge of at least one side surface of each of the first thermal insulation layer 11 and the second thermal insulation layer 12, and the protrusions of the two are disposed opposite each other and enclose the assembly cavity. In a specific example shown in FIG. 5, protrusions are formed at four peripheral edges of one side surface of each of the first thermal insulation layer 11 and the second thermal insulation layer 12, and the protrusions of the first thermal insulation layer 11 and the second thermal insulation layer 12 are disposed opposite each other and enclose the assembly cavity.

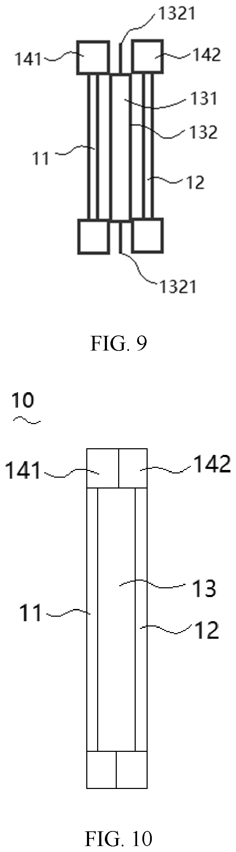

Typically, two sides of the phase change material layer 131 are encapsulated by an encapsulation film, and there is an encapsulation margin portion at an edge, for example, an encapsulation margin portion 1321 in FIG. 9 below, that is, the encapsulation layer 132 has an encapsulation margin portion. When the composite phase change layer 13 is disposed in the first thermal insulation layer 11 and the second thermal insulation layer 12, the encapsulation margin portion is folded and located in the assembly cavity.

As an example, four sides of the encapsulation layer 132 are each provided with the encapsulation margin portion.

Referring to FIG. 6, in some embodiments, the composite thermal insulation pad 10 further includes a third thermal insulation layer 16, and a composite phase change layer 13 is also disposed between the second thermal insulation layer 12 and the third thermal insulation layer 16. Further, the composite thermal insulation pad 10 may further include more thermal insulation layers, and the above composite phase change layer 13 may also be disposed between adjacent thermal insulation layers.

Further, selection ranges of materials and thicknesses of the third thermal insulation layer 16 and other thermal insulation layers may be the same as those of the first thermal insulation layer 11 and the second thermal insulation layer 12. Specific materials and specific thicknesses may be the same or different.

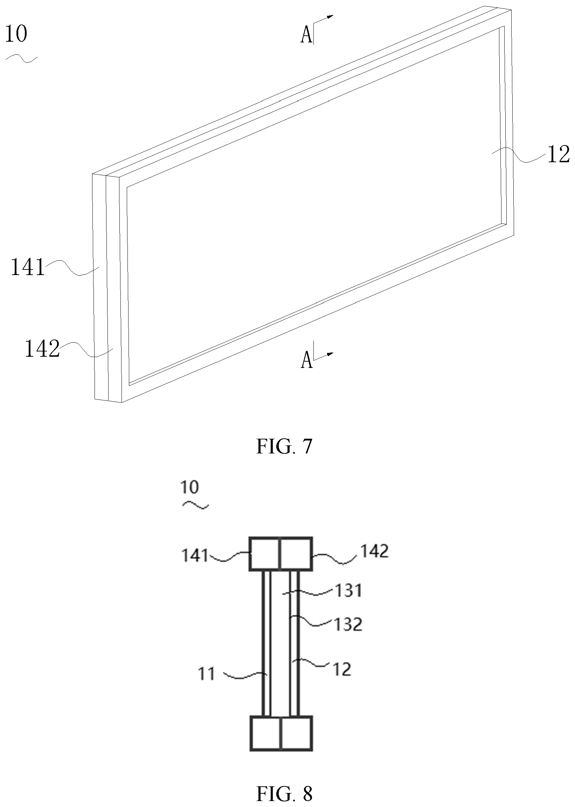

Referring to FIGs. 7 and 8, in some embodiments, the composite thermal insulation pad 10 further includes a first encapsulation frame 141 and a second encapsulation frame 142. The first encapsulation frame 141 is disposed on a side of the first thermal insulation layer 11. The second encapsulation frame 142 is disposed on a side of the second thermal insulation layer 12. The first encapsulation frame 141 cooperates with the second encapsulation frame 142 to fix the first thermal insulation layer 11, the composite phase change layer 13, and the second thermal insulation layer 12.

Further, the first encapsulation frame 141 and the second encapsulation frame 142 are each independently a rubber frame or a silicone frame. In other words, materials of the first encapsulation frame 141 and the second encapsulation frame 142 are each independently rubber or silicone. Further, the first encapsulation frame 141 and the second encapsulation frame 142 are both square frames, such as silicone square frames.

In examples shown in FIGs. 8 and 9, the first encapsulation frame 141 has a first limiting groove (not shown in the figure), and the second encapsulation frame 142 has a second limiting groove (not shown in the figure). The first thermal insulation layer 11, the composite phase change layer 13, and the second thermal insulation layer 12 are limited in a limiting space formed by the first limiting groove and the second limiting groove. The first limiting groove and the second limiting groove can limit the first thermal insulation layer 11, the composite phase change layer 13, and the second thermal insulation layer 12 in a thickness direction and radial direction of the composite thermal insulation pad 10, thereby improving the structural stability of the composite thermal insulation pad 10. The radial direction of the composite thermal insulation pad 10 refers to a direction from a center of the composite thermal insulation pad 10 to an edge of the composite thermal insulation pad 10. Further, in this case, the encapsulation margin portion 1321 of the encapsulation layer 132 may be located between the first encapsulation frame 141 and the second encapsulation frame 142. As shown in FIG. 9, the encapsulation margin portion 1321 is pressed in the middle by the first encapsulation frame 141 and the second encapsulation frame 142.

It can be understood that when the above first encapsulation frame 141 and second encapsulation frame 142 as well as the above first thermal insulation layer 11 and second thermal insulation layer 12 capable of forming the assembly cavity are provided at the same time, the encapsulation margin portion 1321 of the encapsulation layer 132 may pass between the protrusions of the first thermal insulation layer 11 and the second thermal insulation layer 12 and be located between the first encapsulation frame 141 and the second encapsulation frame 142, or the encapsulation margin portion 1321 of the encapsulation layer 132 may be folded and located in the assembly cavity.

Referring to FIG. 10, in some other embodiments, an outer surface of the first thermal insulation layer 11 is flush with an outer surface of the first encapsulation frame 141, and/or an outer surface of the second thermal insulation layer 12 is flush with an outer surface of the second encapsulation frame 142. In this way, the thickness of the composite thermal insulation pad 10 can be minimized, the space occupied by the composite thermal insulation pad 10 can be reduced, and good thermal insulation performance can be provided.

As an example, on the basis that the above first adhesive layer 151 and second adhesive layer 152 are included, the above first encapsulation frame 141 and second encapsulation frame 142 can be further configured to fix the peripheries of the first thermal insulation layer 11, the composite phase change layer 13, and the second thermal insulation layer 12, thereby improving the structural stability of the composite thermal insulation pad 10. Further, in this case, the encapsulation frame does not need to fix the thickness direction, so that the outer surface of the first thermal insulation layer 11 may be flush with the outer surface of the first encapsulation frame 141, and the outer surface of the second thermal insulation layer 12 may be flush with the outer surface of the second encapsulation frame 142.

It can be understood that in some embodiments, the first thermal insulation layer 11, the composite phase change layer 13, the second thermal insulation layer 12, and the third thermal insulation layer 16 may be connected to each other through the above adhesive layer, the above encapsulation frame, or both the above adhesive layer and encapsulation frame, or neither, for example, a manner of directly forming the first thermal insulation layer 11 on the encapsulation layer 132 of the composite phase change layer 13.

Further, the above first thermal insulation layer 11, second thermal insulation layer 12, and third thermal insulation layer 16 each independently include at least one of a thermal insulation felt and a thermal insulation coating.

Furthermore, when any of the above thermal insulation layers includes both a thermal insulation felt and a thermal insulation coating, the thermal insulation coating is optionally provided on a side closer to the composite phase change layer 13. Specifically, the thermal insulation coating is disposed on a surface of the encapsulation layer 132 of the composite phase change layer 13, and the thermal insulation felt is disposed on a side farther from the composite phase change layer 13. In other words, the thermal insulation coating is directly formed on the surface of the encapsulation layer 132, and the thermal insulation coating is located between the encapsulation layer 132 and the thermal insulation felt.

For example, in the examples of FIGs. 3, 4, and 6, the above first thermal insulation layer 11 and second thermal insulation layer 12 are thermal insulation felts, and the third thermal insulation layer 16 is also a thermal insulation felt. In some other examples, the above first thermal insulation layer 11 and second thermal insulation layer 12 may alternatively be thermal insulation coatings. In contrast, a thickness of the thermal insulation coating is smaller, the overall thickness of the prepared composite thermal insulation pad is smaller, and the required space is relatively smaller. The thermal insulation layer of the composite thermal insulation pad 10 optionally uses a thermal insulation coating or a composite of a thermal insulation coating and a ceramic felt, which can guarantee both a small occupied space and good thermal insulation performance.

For example, in an example shown in FIG. 5, the above first thermal insulation layer 11 and second thermal insulation layer 12 are each a thermal insulation felt, and the assembly cavity thereon may be integrally formed when the thermal insulation felt is formed, or may be formed by grooving after the thermal insulation felt is formed.

It can be understood that the thermal insulation felt may be connected to the composite phase change layer 13 through the above adhesive layer or encapsulation frame. The thermal insulation coating may be directly formed on the encapsulation layer 132 in the composite phase change layer 13. As an example, the thermal insulation coating may be prepared by applying a slurry on the encapsulation layer 132 of the composite phase change layer 13 and then drying to form a coating.

Furthermore, the thermal insulation felt may be a ceramic thermal insulation felt; and furthermore, the thermal insulation coating may be a ceramic thermal insulation coating.

In some embodiments, the first thermal insulation layer 11, the second thermal insulation layer 12, and the third thermal insulation layer 16 each independently meet the following conditions: a thermal conductivity at 25°C is less than or equal to 0.020 W/m·K, a thermal conductivity at 200°C is less than or equal to 0.027 W/m·K, a thermal conductivity at 300°C is less than or equal to 0.035 W/m·K, and a thermal conductivity at 500°C is less than or equal to 0.080 W/m·K.

In some embodiments, densities of the first thermal insulation layer 11, the second thermal insulation layer 12 and the third thermal insulation layer 16 are each independently 0.2 g/cm³ to 0.22 g/cm³.

In this specification, the thicknesses in the composite thermal insulation pad can be tested by the following method: A device used is a Mitutoyo 547-301 thickness gauge. An accuracy of the device is less than or equal to 0.01 mm. During test, it is required that test surfaces of the composite thermal insulation pad and the Mitutoyo 547-301 thickness gauge are both kept parallel to the ground. There are a total of five test positions including four corners and a center region, and an average of values tested at the five positions is taken as a test value.

In some embodiments, the first thermal insulation layer 11 and the second thermal insulation layer 12 each independently include a ceramic material layer.

In some embodiments, the first thermal insulation layer 11 is a ceramic material layer.

In some embodiments, the second thermal insulation layer 12 is a ceramic material layer.

A material in the "ceramic material layer" in this application includes but is not limited to at least one of ceramic oxide, ceramic nitride, and ceramic carbide. The ceramic oxide includes but is not limited to at least one of silicon oxide and aluminum oxide. The ceramic nitride includes but is not limited to silicon nitride. The ceramic carbide includes but is not limited to silicon carbide.

In some examples, the ceramic material layer may be a laminate of one or more of a silicon oxide layer, an aluminum oxide layer, a silicon nitride layer, and a silicon carbide layer.

Further, the ceramic thermal insulation felt may be a silica aerogel ceramic felt. As an example, the silica aerogel ceramic felt can be prepared by using inorganic fiber reinforcement technology to prepare an aerogel material, and then performing processes of sol impregnation, gelation, solvent replacement, and supercritical drying.

In some embodiments, a thickness of the encapsulation layer 132 is 0.1 mm to 0.3 mm. For example, it may be 0.1 mm, 0.15 mm, 0.2 mm, or 0.3 mm, optionally 0.1 mm to 0.15 mm, or 0.2 mm to 0.3 mm.

In some embodiments, the encapsulation layer 132 includes or is an aluminum-plastic film or a polymer encapsulation film.

Further, the encapsulation layer 132 includes a polypropylene layer, an aluminum layer, and a nylon layer that are stacked from inside to outside.

Further, the polymer encapsulation film may be a PET film (polyethylene terephthalate film) or a PI film (polyimide film).

In some embodiments, a weak portion is provided on a region of the encapsulation layer 132 that constitutes the encapsulation cavity. Since a position of the weak portion is a weak region, when the phase change material layer 131 absorbs a large amount of heat, the phase change material in the phase change material layer 131 undergoes a phase change, causing the encapsulation layer 132 to bulge. This allows the encapsulation layer 132 to break from the weak portion in time during thermal runaway, further reducing the damage degree of thermal runaway to the entire battery.

It can be understood that the weak portion on the encapsulation layer 132 is a region with relatively weak strength on the encapsulation layer 132.

In some embodiments, the weak portion is a region with a small thickness and/or weak material strength. In other words, the weak portion may be a region with a small thickness but unchanged material strength, which can be formed by partially thinning the encapsulation layer 132. The weak portion may alternatively be a region with an unchanged thickness but weak material strength, which can be formed by partially weakening the material strength of the encapsulation layer 132, for example, using materials with different strengths. The weak portion may alternatively be a region with a small thickness and weak material strength. It can be understood that the material strength here refers to the strength of the material itself.

Further, the weak portion is a scored region formed on the encapsulation layer 132. It can be understood that the scored region is formed by thinning the surface of the encapsulation layer 132 in the form of scoring, and a thickness of the scored region is relatively small.

Further, the weak portion may be disposed on an outer side or inner side of the encapsulation layer 132. The outer side refers to a surface of the encapsulation layer 132 away from the phase change material layer 131, and the inner side refers to a surface of the encapsulation layer 132 close to the phase change material layer 131.

Further, a percentage of a depth of the weak portion in the thickness of the encapsulation layer 132 is 15% to 50%. For example, the percentage may be 15%, 20%, 30%, 35%, 40%, 45%, or 50%. Controlling the percentage of the depth in the thickness allows the encapsulation layer to guarantee both a good isolation effect when there is no need to break and a good effect of breaking in time during thermal runaway.

Further, the aluminum-plastic film includes an aluminum foil layer and a plastic film layer disposed on two surfaces of the aluminum foil layer.

Further, when the encapsulation layer 132 is an aluminum-plastic film, the weak portion penetrates from a surface of the aluminum-plastic film into 30% to 60% of a thickness of the aluminum foil layer, for example, 30%, 40%, 50%, or 60%. The weak portion is controlled to penetrate into the aluminum foil layer but not through the aluminum foil layer, and the weak portion is further controlled to penetrate to 30% to 60% of the thickness of the aluminum foil layer, so that the encapsulation layer can guarantee both a better isolation effect when there is no need to break and a better effect of breaking in time during thermal runaway.

The plastic film layer in the aluminum-plastic film may include but is not limited to at least one of a polypropylene layer, a nylon layer, and a polyester layer. In some examples, the encapsulation layer 132 includes a polypropylene layer, an aluminum foil layer, a nylon layer, and a polyester layer that are stacked from inside to outside. As a specific example, thicknesses of the polypropylene layer, the aluminum foil layer, the nylon layer, and the polyester layer are 80 µm, 40 µm, 15 µm, and 6 µm respectively. The weak portion may penetrate from one side of the polyester layer to a position of half the thickness of the aluminum foil layer.

In some embodiments, in addition to the phase change material, the phase change material layer 131 further includes a thermal insulation substrate, and at least part of the phase change material is filled in pores of the thermal insulation substrate. In other words, the pores of the thermal insulation substrate are filled with the phase change material.

The thermal insulation substrate may be a ceramic material substrate, such as a ceramic fiber felt.

Further, in some examples, at least part of the phase change material is directly filled in the pores of the thermal insulation substrate. In some other examples, the phase change material may also be filled in the pores of the thermal insulation substrate in the form of phase change microcapsules. It can be understood that a same thermal insulation substrate may include both phase change materials in two states, where the phase change material in one state is directly filled in the pores of the thermal insulation substrate, and the phase change material in the other state is filled in the pores of the thermal insulation substrate in the form of phase change microcapsules.

It can be understood that a thermal insulation substrate with pores such as a ceramic fiber felt is impregnated with a liquid phase change material, for example, impregnated with a molten phase change material and then cooled, or impregnated with a phase change material solution and then dried or subjected to heat preservation treatment, to obtain the phase change material layer 131. In addition to absorbing heat, the phase change material layer 131 can also play a thermal insulation role. When the phase change material is gasified to burst the encapsulation layer 132, that is, the composite thermal insulation pad 10 fails, the thermal insulation substrate in the phase change material layer 131 can continue to play a thermal insulation role. In other words, the phase change material is directly filled in the pores of the thermal insulation substrate.

In some other embodiments, at least part of the phase change material is filled in the pores of the thermal insulation substrate in the form of phase change microcapsules. In other words, the pores of the thermal insulation substrate of the phase change material layer 131 may be filled with phase change microcapsules. The phase change microcapsules each include a core material and a wall material. The wall material is wrapped on an outer surface of the core material. The core material includes a phase change material. It can be understood that in some examples, the pores of the thermal insulation substrate may also be directly filled with both the phase change material and the above phase change microcapsules.

The above phase change material layer 131 may be prepared by dispersing phase change microcapsules in a solvent to obtain a phase change microcapsule dispersion, then immersing the thermal insulation substrate in the phase change microcapsule dispersion, filling the phase change microcapsules in the pores of the thermal insulation substrate, and removing the solvent in the phase change microcapsule dispersion.

In this way, the phase change microcapsules in the phase change material layer 131 play a role in absorbing heat. When a cell undergoes thermal runaway, the phase change material in the composite thermal insulation pad 10 adjacent thereto is gasified to burst the encapsulation layer 132, that is, the composite thermal insulation pad 10 fails. In this case, the thermal insulation substrate in the phase change material layer 131 can continue to play a thermal insulation role.

Further, the wall material includes a polymer matrix and ceramic particles filled in the polymer matrix. Further, a mass ratio of the polymer matrix to the ceramic particles is 3:(7 to 11). As an example, the mass ratio of the polymer matrix to the ceramic particles may be 3:7, 3:8, 3:9, 3:10, or 3:11. Controlling the mass content of ceramic particles in the wall material to be large can improve the pressure resistance and thermal insulation capacity of the wall material.

Further, the mass ratio of the polymer matrix to the core material is 1:(1.3 to 1.6). As an example, the mass ratio of the polymer matrix to the core material may be 1:1.3, 1:1.4, 1:1.5, or 1:1.6. This can further improve the pressure resistance of the phase change microcapsules.

Further, the polymer matrix includes but is not limited to any one of phenolic resin, polyacrylonitrile resin, melamine formaldehyde resin, and the like. The polymer matrix not only has good insulation properties, but also has good compatibility with a phase change material such as paraffin, can form a stable interface with the phase change material, and improves the thermal stability of the phase change microcapsules.

Further, a particle size Dᵥ50 of the phase change microcapsules is 5 µm to 8 µm. The particle size Dᵥ50 is a volume-based median particle size Dᵥ50, represents a corresponding particle size when a cumulative volume distribution percentage of particles reaches 50%, and may be tested using methods known in the art. For example, the particle size Dᵥ50 is measured using a laser particle size analyzer (such as Malvern Master Size 3000).

Further, a thermal conductivity of the wall material at 25°C is greater than or equal to 0.32 W/mK. In this way, the wall material has a good thermal conductivity and can better conduct heat to the phase change material inside the wall material.

Further, a melting point of the wall material is greater than 98°C. The wall material has a high melting point and can maintain the structural stability of the microcapsules within a phase change temperature range of the phase change material.

In this application, material selection ranges of the above thermal insulation substrate and ceramic particles are the same as a selection range of the above ceramic material layer. In some examples, the above thermal insulation substrate is a ceramic fiber mat. The ceramic fiber mat has ceramic fiber as a core skeleton, so that the ceramic fiber mat may be well impregnated with the liquid phase change material, and the phase change material is filled in pores of the core skeleton. In addition, the ceramic fiber mat has low thermal conductivity, high resistance to high temperature (1280°C), high resistance to instantaneous thermal shock, good flame-retardant performance, good mechanical properties, no powdering, flexibility, resilience, and compatibility with a battery pack manufacturing process.

In some examples, the ceramic particles include but are not limited to at least one of boron nitride particles, silicon nitride particles, silicon carbide particles, silicon dioxide particles, and the like. Further, Dᵥ50 of the ceramic particles is 60 nm to 90 nm. As an example, Dᵥ50 of the ceramic particles may be any value of 60 nm, 65 nm, 70 nm, 75 nm, 80 nm, 83 nm, 85 nm, or 90 nm, or falls within a range defined by any two of these values. The above silicon dioxide particles with a specified particle size are conducive to doping and uniform dispersion in the substrate.

The phase change microcapsules may be prepared using an in-situ polymerization method in which the core material is coated with the wall material. In some examples, a preparation method of the phase change microcapsules includes the following steps: dispersing ceramic particles in water to form an aqueous phase; heating the phase change material to a molten state to form an oil phase; mixing the aqueous phase and the oil phase, and stirring to form a Pickering emulsion; adding raw materials required for preparing the polymer matrix of the wall material (such as a water-soluble polymer monomer or a prepolymer aqueous solution) to the Pickering emulsion; then stirring and polymerizing at room temperature, and generating a non-water-soluble polycondensate (that is, a polymer matrix) with a cross-linked three-dimensional network structure at an emulsion interface.

The polymer matrix made of the above material has better compatibility with phase change materials such as paraffin, and also helps all the ceramic particles to be uniformly dispersed, thereby ensuring the stability of the phase change microcapsules.

Further, a plurality of battery cells 20 are provided in the battery 30, and the composite thermal insulation pad 10 is disposed between at least two adjacent battery cells 20. Typically, a battery includes a plurality of battery cells, and systems and capacities of the plurality of battery cells are the same.

Optionally, the composite thermal insulation pad 10 is disposed between any two adjacent battery cells 20. It can be understood that the above composite thermal insulation pad 10 may also be disposed between the battery cell 20 and an inner wall of a housing of the battery 30.

It can be understood that the shape of the battery cell 20 includes but is not limited to a rectangle and a cylinder. The composite thermal insulation pad 10 may fit the battery cell 20 based on the shape of the battery cell 20.

In some embodiments, the battery cell 20 is rectangular, and the composite thermal insulation pad 10 is disposed on a side surface with a large area (that is, a large surface) of the battery cell 20, thereby increasing a contact area and improving the thermal insulation performance.

It can be understood that after a plurality of battery cells 20 are connected to each other and arranged in a certain order, the battery cells 20 may be directly accommodated in a box and assembled to form a battery. A plurality of battery cells 20 may alternatively be first assembled into a battery module, and then a plurality of battery modules are connected to each other to form an entirety, and the entirety formed by the battery modules is finally accommodated in the box to form a battery.

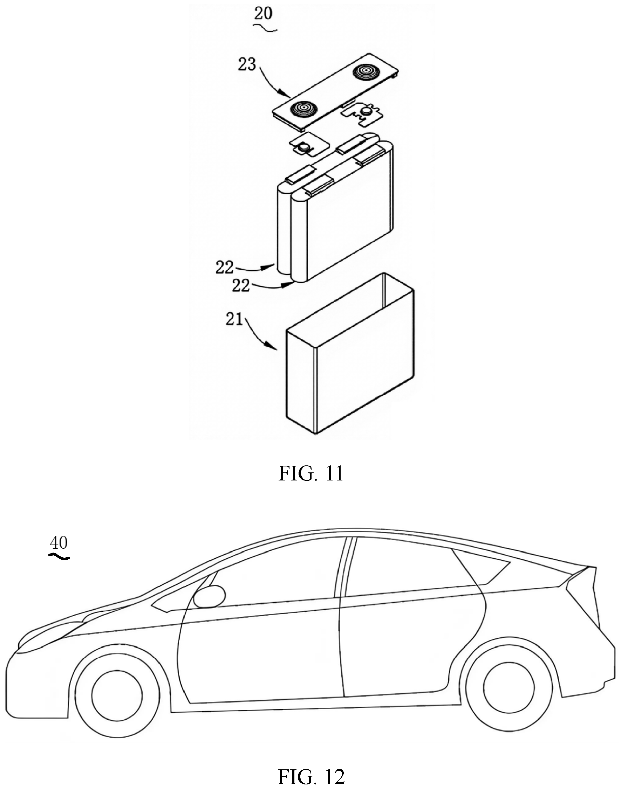

FIG. 11 is a battery cell 20 of a rectangular structure as an example. The battery cell 20 includes a housing 21, a cover plate 23, and an electrode assembly 22. The housing 21 has an opening. The electrode assembly 22 is accommodated in the housing 21. The cover plate 23 seals the opening. The electrode assembly 22 includes a positive electrode plate, a negative electrode plate, and a separator. The positive electrode plate, the negative electrode plate, and the separator may be formed by a winding process or a lamination process.

Further, the electrode assembly 22 further includes an electrolyte, such as a liquid electrolyte. The liquid electrolyte infiltrates into the electrode assembly 22. One or more electrode assemblies 22 may be included in the battery cell 20, which may be selected by those skilled in the art according to specific actual needs.

Further, one end or two ends of the housing 21 are provided with openings.

Further, the housing 21 is a cuboid housing, and an opening direction of the housing 21 is a height direction of the housing 21. Further, two ends of the housing 21 are provided with openings, and the two openings are disposed opposite each other along the height direction of the housing 21. Further, as a non-limiting example, a height of the housing 21 is 80 mm to 210 mm. Further, as a non-limiting example, a length of the housing 21 is 90 mm to 240 mm. Further, as a non-limiting example, a width of the housing 21 is 20 mm to 80 mm.

Further, the battery cell 20 and the housing 21 are cuboid housings. The composite thermal insulation pad 10 is disposed on a side surface of the battery cell 20 with a large area. The side surface with a large area is perpendicular to the above width direction, that is, a side surface formed by two sides in the above length direction and height direction.

Further, as a non-limiting example, a wall thickness of the housing 21 is 0.5 mm to 0.8 mm.

Further, the housing 21 is an aluminum alloy housing, for example, a three-series aluminum alloy housing or a five-series aluminum alloy housing.

Further, the aluminum alloy of the three-series aluminum alloy housing includes the following components in mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%.

Further, the aluminum alloy of the five-series aluminum alloy housing includes the following components in mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and total other elements ≤ 0.15%.

Further, the electrode assembly 22 further includes an electrolyte. The electrolyte infiltrates into the electrode assembly 22. One or more electrode assemblies 22 are included in the battery cell 20, which may be selected by those skilled in the art according to specific actual needs.

The working principle of the battery using the above composite thermal insulation pad 10 is as follows: In a first stage, after one battery cell 20 in the battery 30 undergoes thermal runaway, heat is transferred to a composite thermal insulation pad 10 close to the battery cell 20 (for example, adjacent to the battery cell 20), and a phase change material layer 131 in the composite thermal insulation pad 10 absorbs heat to achieve the effect of retarding battery thermal runaway. In a second stage, the phase change material layer 131 absorbs heat until a phase change occurs, thereby absorbing a large amount of heat. In a third stage, an encapsulation layer 132 and the phase change material layer 131 fail, a phase change material in the phase change material layer 131 is converted into a gaseous state to burst the encapsulation layer 132, and a high-temperature gas is discharged. In a fourth stage, a first thermal insulation layer 11 and a second thermal insulation layer 12 as well as an optional thermal insulation substrate in a composite phase change layer 13 continue to play a thermal insulation role.

The first stage and the second stage are states before the composite thermal insulation pad 10 fails, and the third stage and the fourth stage are states after the composite thermal insulation pad 10 fails.

Another embodiment of this application further provides an electric apparatus including the above battery provided by this application. The above battery may be used as a power source for the electric apparatus or as an energy storage unit for the electric apparatus. The electric apparatus may include a mobile device, an electric vehicle, an electric train, a ship, a satellite, and an energy storage system, but is not limited thereto. The mobile device may be, for example, a mobile phone or a laptop computer. The electric vehicle may be, for example, a pure electric vehicle, a hybrid electric vehicle, a plug-in hybrid electric vehicle, an electric bicycle, an electric scooter, an electric golf cart, or an electric truck, but is not limited thereto.

As an electric apparatus, a secondary battery, a battery module, or a battery pack may be selected according to its usage requirements.

FIG. 12 is an electric apparatus 40 as an example. The electric apparatus 40 is a pure electric vehicle, a hybrid electric vehicle, a plug-in hybrid electric vehicle, or the like. To satisfy requirements of the electric apparatus for high power and high energy density of a secondary battery, a battery pack or a battery module may be used.

As another example, the apparatus may be a mobile phone, a tablet computer, a laptop computer, or the like. Such apparatus is generally required to be light and thin and may use a secondary battery as its power source.

The specific examples are described below.

Specifically, a battery of Example 1 is described below. The battery includes two battery cells (that is, cells) and a composite thermal insulation pad disposed between the two battery cells. The two battery cells are both five-series cells, that is, NCM523 cells, where each cell has a capacity of 215 Ah. The composite thermal insulation pad includes a first thermal insulation layer, a composite phase change layer, and a second thermal insulation layer that are stacked. The first thermal insulation layer and the second thermal insulation layer are both silica aerogel ceramic felts. The composite phase change layer includes a phase change material layer and an encapsulation layer disposed on an outer peripheral side of the phase change material layer. The encapsulation layer is an aluminum-plastic film with a thickness of 0.2 mm. The phase change material in the phase change material layer is CaCl₂·6H₂O.

The above battery was tested as follows: Thermal runaway of a first cell (referred to as a cell A) was triggered, and the thermal insulation performance of the composite thermal insulation pad on a second cell (referred to as a cell B) was investigated. In addition, the overall thickness of the composite thermal insulation pad was kept unchanged. A thickness of each of the first thermal insulation layer, the composite phase change layer, and the second thermal insulation layer was adjusted, so that the influence of an internal film layer thickness of the composite thermal insulation pad on the thermal insulation performance of the composite thermal insulation pad was investigated. The specification of the composite thermal insulation pad was a rectangle with a size of 100 mm × 100 mm, a total thickness was 6.3 mm, and the thickness of each film layer was shown in Table 2.

A test method was as follows: The heating table was heated. Temperature sensing lines were installed on two large surfaces of the cell A and two large surfaces of the cell B respectively. The above battery was placed on the heating table, and an aluminum plate was pressed on the above battery with a pressure of 3000 N. The temperatures of the two large surfaces of the cell A and the two large surfaces of the cell B within 1000s or 2000s were measured, so that the thermal insulation effect of the thermal insulation pad could be determined. There were three temperature sampling points on each surface, where one was a center point, and the other two were distributed centrally symmetrically with respective to the center point, with a distance of 15 mm from the center point.

The thermal diffusion times (measured values) of batteries 1 to 4 obtained through the above test are shown in Table 2, where the battery 1 is a pure thermal insulation pad without a composite phase change layer, and "2 mm + 2.3 mm + 2 mm" in the battery 2 means that the thicknesses of the first thermal insulation layer, the composite phase change layer, and the second thermal insulation layer of the composite thermal insulation pad are 2 mm, 2.3 mm, and 2 mm respectively, and the others are similar.

**Table 2**

| Example 1 | Composite thermal insulation pad | Thermal diffusion time (s) | |
|---|---|---|---|
| Five-series 215Ah | Thickness of first thermal insulation layer + composite phase change layer + second thermal insulation layer | Measured value | Simulated value |
| Battery 1 | Silica aerogel ceramic felt with a thickness of 6.3 mm | 480 | 462 |
| Battery 2 | 2 mm + 2.3 mm + 2 mm | 1001 | 952 |
| Battery 3 | 1.5 mm + 3.3 mm + 1.5 mm | 532 | 474 |
| Battery 4 | 1.2 mm + 3.9 mm + 1.2 mm | 500 | 488 |

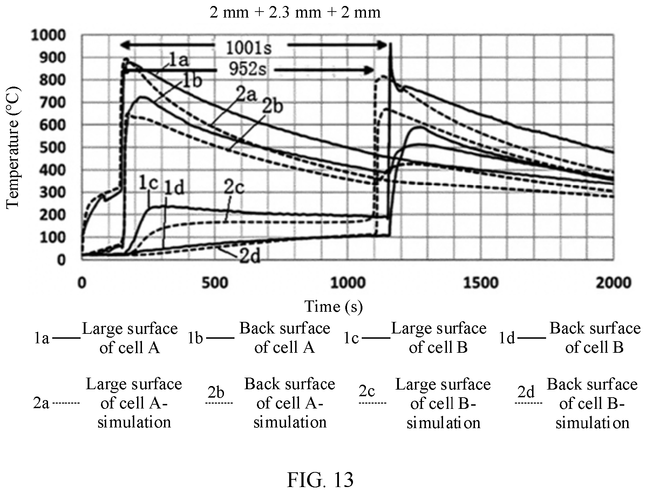

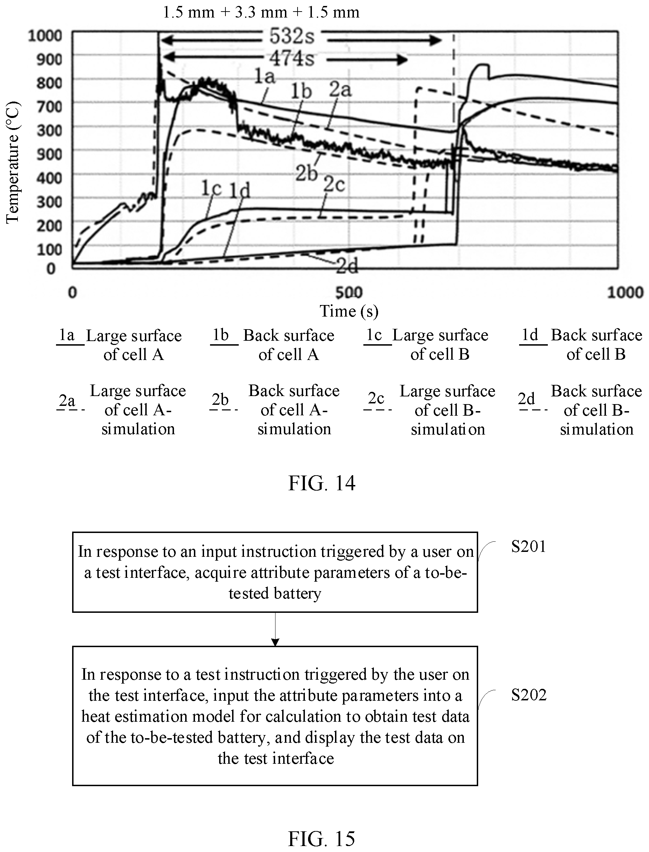

The actually measured curves of the thermal insulation performance of the battery 2 and the battery 3 are shown as curves 1a to 1d in FIGs. 13 and 14 respectively.

The large surface of the cell A refers to a large surface of the cell A that is in direct contact with the heating table, and another surface opposite the large surface is a back surface of the cell A. The large surface of the cell B refers to a large surface of the cell B that is in direct contact with the composite thermal insulation pad, and another surface opposite the large surface is a back surface of the cell B.

It can be seen from FIG. 13 that within the test time of 2000s, within the first 1150s, when the hot surface temperature of the large surface of the cell A reaches nearly 900°C, due to the thermal insulation effect of the composite thermal insulation pad, the highest temperature of the large surface of the cell B does not exceed 250°C, and the temperature of the back surface of the cell B does not exceed 100°C. Within the first 1150s, the temperature of the large surface of the cell B basically maintains a temperature platform near 250°C from the highest temperature of the large surface of the cell A. A duration corresponding to the temperature platform (the temperature platform from the highest temperature of the large surface of the cell A to an inflection point of the temperature rise of the large surface of the cell B) is the thermal diffusion time in Table 2.

It can be seen from FIG. 14 that within the test time of 1000s, within the first 700s, when the hot surface temperature of the large surface of the cell A reaches nearly 900°C, due to the thermal insulation effect of the composite thermal insulation pad, the highest temperature of the large surface of the cell B does not exceed 350°C, and the temperature of the back surface of the cell B does not exceed 100°C. Within the first 700s, the temperature of the large surface of the cell B basically maintains a temperature platform near 250°C from the highest temperature of the large surface of the cell A. A duration corresponding to the temperature platform (the temperature platform from the highest temperature of the large surface of the cell A to an inflection point of the temperature rise of the large surface of the cell B) is the thermal diffusion time in Table 2.

It can be seen from Table 2 that under the condition that the thicknesses of the composite thermal insulation pads are the same, the thermal insulation performance of the composite thermal insulation pads of the batteries 2 and 3 is better, and the thermal insulation performance of the composite thermal insulation pad of battery 2 is the best. For the battery 2 which is a ternary lithium battery cell with an atomic percentage of the nickel element to ternary elements being greater than or equal to 50% and less than 70%, the thickness of the composite phase change layer is 2.3 mm to 3.3 mm, and the thicknesses of the first thermal insulation layer and the second thermal insulation layer are each 1.5 mm to 2.5 mm. Further, the capacity of the battery cell is 215 Ah, which falls within the range of the capacity of the battery cell being greater than or equal to 150 Ah and less than 200 Ah. Optionally, the thickness of the composite phase change layer is 2.3 mm to 3.3 mm, and the thicknesses of the first thermal insulation layer and the second thermal insulation layer are each independently 1.5 mm to 2 mm.

In some embodiments, the film layer thickness of the above composite thermal insulation pad can be obtained by simulation screening using a heat estimation model. The thermal diffusion times (simulated values) of the batteries 1 to 4 obtained by simulation using the heat estimation model are shown in Table 2. The simulation test curves of the thermal insulation performance of the battery 2 and the battery 3 are shown as curves 2a to 1d in FIGs. 13 and 14 respectively. By comparing the measured values with the simulated values, it can be seen that the error between the two is within 15%. As shown in Table 2, the thickness composition of a better composite thermal insulation pad is screened through the measured value and/or simulated value of the thermal diffusion time. As shown in the above Table 2 of this application, for different systems and capacities of the battery cells, the thicknesses of the composite thermal insulation pads are verified by both actual measurement and heat estimation model simulation.

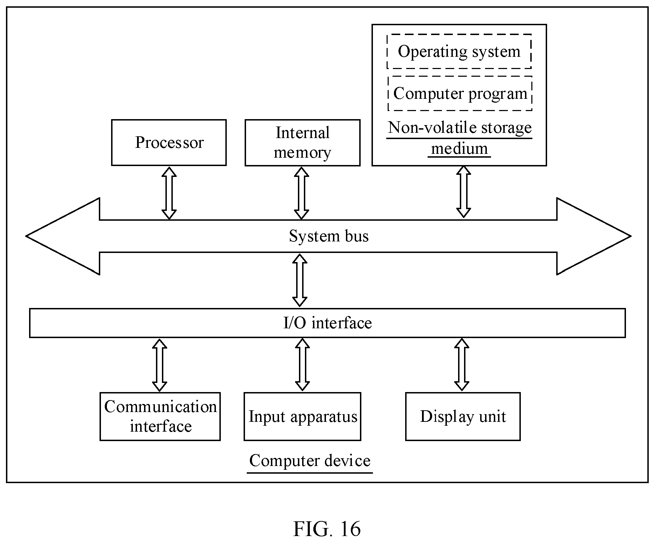

FIG. 15 shows a test method for a battery using a heat estimation model. The test method can obtain test data, and the simulated value of thermal diffusion time can be obtained from the test data. The following takes the application of this method to a computer device in FIG. 16 as an example for explanation. The computer device may be a terminal, with an internal structure diagram which may be as shown in FIG. 16. The computer device includes a processor, a memory, a communication interface, a display, and an input apparatus connected through a system bus. The processor of the computer device is configured to provide computing and control capabilities. The memory of the computer device includes a non-volatile storage medium and an internal memory. The non-volatile storage medium stores an operating system and a computer program. The internal memory provides an environment for the operation of the operating system and the computer program in the non-volatile storage medium. The communication interface of the computer device is configured to communicate with an external terminal in a wired or wireless manner. The wireless manner can be realized through WIFI, mobile cellular network, NFC (near field communication), or other technologies. When the computer program is executed by the processor, a battery test method is realized. The display of the computer device may be a liquid crystal display or an electronic ink display. The input apparatus of the computer device may be a touch layer covering the display, or a button, trackball, or touch pad disposed on a housing of the computer device, or an external keyboard, touch pad, mouse, or the like. Those skilled in the art can understand that the structure shown in FIG. 16 is only a block diagram of a partial structure related to the solution of this application, and does not constitute a limitation on the computer device to which the solution of this application is applied. The specific computer device may include more or fewer components than shown in the figure, or combine some components, or have different component arrangements.

The test method for a battery using a heat estimation model includes the following steps.

S201. In response to an input instruction triggered by a user on a test interface, acquire attribute parameters of a to-be-tested battery.

The input instruction is used to acquire the attribute parameters of the to-be-tested battery input by the user on the test interface, which carries the attribute parameters of the to-be-tested battery. The attribute parameters are related parameters for calculating the thermal diffusion performance of the battery. The test interface is an interface of a test application or simulation software. For example, when a test APP is used to test a battery, the test interface is a test interface of the test APP. The test application or simulation software can realize the construction of a simulation model for the battery and perform testing based on the simulation model.

In the embodiments of this application, a test application (for example, a battery simulation APP) or simulation software is pre-installed on the computer device. The test application or simulation software can be operated to perform simulation testing on the battery, thereby guiding the design of the battery. When it is necessary to test a thermal runaway battery or a battery, a test application or simulation software for simulating the battery can be started on the computer device. The display of the computer device can display a test interface corresponding to the test application or simulation software. The user can input the attribute parameters of the to-be-tested battery on the test interface. After the user inputs the attribute parameters, the computer device can generate an input instruction carrying the attribute parameters, and the computer device can immediately respond to the input instruction triggered by the user on the test interface, parse the input instruction, extract the attribute parameters of the to-be-tested battery from the input instruction, and obtain the attribute parameters of the to-be-tested battery. Optionally, after the user inputs the attribute parameters of the battery on the test interface, the computer device can also store the attribute parameter in a cache. When the computer device responds to the input instruction, the attribute parameter can be obtained from the cache according to the instructions of the input instruction.

S202. In response to a test instruction triggered by the user on the test interface, input the attribute parameters into a heat estimation model for calculation to obtain test data of the to-be-tested battery, and display the test data on the test interface.

The test instruction is used to start the test of the to-be-tested battery, that is, to test according to the attribute parameters and the heat estimation model to realize the test of the simulated and to-be-tested battery. The heat estimation model is used to calculate the thermal diffusion influence on the battery according to the attribute parameters. The test data includes the temperature change data of the large surface of each thermal runaway cell in the to-be-tested battery and the temperature change data of a bottom surface of the cell. For example, the to-be-tested battery includes a thermal runaway cell A and a thermal runaway cell B. The test data includes the temperature change data of a large surface of the thermal runaway cell A over time, the temperature change data of the bottom surface of the thermal runaway cell A over time, the temperature change data of the large surface of the thermal runaway cell B over time, and the temperature change data of the bottom surface of the thermal runaway cell B over time. The heat estimation model can be pre-built and stored in a database. The database may include various types of battery test models for providing calculation methods for battery performance testing. Optionally, the heat estimation model can be used to calculate the heat exchange thermal resistance between the thermal runaway cell in the to-be-tested battery and the air, and to calculate the internal thermal resistance of the thermal runaway cell, so as to realize the calculation of the thermal diffusion performance of the thermal runaway cell according to these two calculations.

Optionally, the heat estimation model can be determined by using the following relational expression (1): ${ρC}_{p} \frac{\partial T}{\partial τ} = ∇ \left(k∇T\right) + \dot{φ}$ (1) where *ρ* represents a density of the cell, *Cₚ* represents a specific heat capacity of the cell, *T* represents the temperature of the cell, *τ* represents a test time of the cell, $\frac{\partial T}{\partial τ}$ represents a rate of temperature change with time, k represents a thermal conductivity, and *φ̇* represents the self-generated heat of the cell. The density of the cell, the specific heat capacity of the cell, the self-generated heat of the cell, and the thermal conductivity all belong to the attribute parameters of the cell. The computer device can calculate the cell density and the specific heat capacity of the cell based on some geometric parameters of the cell, for example, calculating the cell density and the specific heat capacity of the cell according to the cell length, cell width, cell height, cell side shell thickness, cell large surface shell thickness, cell bottom surface shell thickness, and the like. Optionally, the density of the cell, the specific heat capacity of the cell, the thermal conductivity of the cell, and the self-generated heat of the cell can also be determined according to the specification of the cell.

In the embodiments of this application, when the computer device obtains the attribute parameters of the to-be-tested battery based on the foregoing steps, the user can trigger the generation of a test instruction on the test interface by clicking a control, voice input, text input, or the like. Optionally, the test instruction may include an identifier of the heat estimation model. When the computer device responds to the test instruction triggered by the user on the test interface, the test instruction can be parsed, the identifier of the heat estimation model can be extracted from the test instruction, the heat estimation model can be further searched and obtained from the database according to the identifier of the heat estimation model, the attribute parameters of the to-be-tested battery are input into the heat estimation model for calculation, and the temperature change data of each surface on the thermal runaway cell in the to-be-tested battery is calculated, that is, the test data is obtained.

The test method described in the embodiments of this application obtains the attribute parameters of the to-be-tested battery by responding to the input instruction triggered by the user on the test interface, and responds to the test instruction triggered by the user on the test interface, inputs the attribute parameters into the heat estimation model for calculation, obtains the test data of the to-be-tested battery, and displays the test data on the test interface. The above test method provides a simulation application that can test the to-be-tested battery, that is, inputting the corresponding test instruction on the test interface of the application to test the thermal runaway situation or thermal runaway heat dissipation situation of the to-be-tested battery according to user needs and using a preset heat estimation model. Compared with the conventional method of actually measuring the to-be-tested battery, the above method is a user-operable simulation test method, which does not rely on actual thermal runaway batteries for testing, can avoid additional costs caused by design trial and error to a certain extent, and reduce the number of test experiments, thereby reducing the test cost of the to-be-tested battery and improving the test efficiency of the battery to a certain extent.

The technical features of the above embodiments can be combined arbitrarily. For brevity of description, not all possible combinations of the technical features in the foregoing embodiments are described. However, as long as there is no conflict among combinations of these technical features, all the combinations should be considered within the scope recorded in this specification.

The foregoing embodiments represent only several implementations of this application, and descriptions thereof are specific and detailed, but should not be construed as any limitations on the scope of this application. It should be noted that those of ordinary skill in the art can further make several modifications and improvements without departing from the concept of this application, and all these modifications and improvements fall within the protection scope of this application. Therefore, the protection scope of this application should be subject to the appended claims.

## Claims

1. A battery, comprising a battery cell and a composite thermal insulation pad disposed on at least one side of the battery cell, wherein the composite thermal insulation pad comprises a first thermal insulation layer, a composite phase change layer, and a second thermal insulation layer that are stacked; the composite phase change layer comprises a phase change material layer and an encapsulation layer disposed on an outer peripheral side of the phase change material layer; a thickness of the composite phase change layer is 1 mm to 4 mm; and thicknesses of the first thermal insulation layer and the second thermal insulation layer are each independently 1 mm to 3 mm.

2. The battery according to claim 1, wherein the battery satisfies at least one of the following conditions:
(1) the thickness of the composite phase change layer is 1.5 mm to 3.5 mm; and
(2) the thicknesses of the first thermal insulation layer and the second thermal insulation layer are each independently 1 mm to 2.5 mm.

3. The battery according to claim 1, wherein the battery cell is a ternary lithium battery; the thickness of the composite phase change layer is 1.5 mm to 3.3 mm; and the thicknesses of the first thermal insulation layer and the second thermal insulation layer are each independently 1 mm to 2.5 mm.

4. The battery according to claim 3, wherein an atomic percentage of the nickel element in ternary elements of a ternary positive electrode material in the battery cell is greater than 0 and less than 50%; and the thicknesses of the first thermal insulation layer and the second thermal insulation layer are each independently 1 mm to 2 mm.

5. The battery according to claim 4, wherein the battery satisfies one of the following conditions:
(1) a capacity of the battery cell is less than 120 Ah, the thickness of the composite phase change layer is 1.5 mm, and the thicknesses of the first thermal insulation layer and the second thermal insulation layer are each independently 1 mm to 1.5 mm;
(2) a capacity of the battery cell is greater than or equal to 120 Ah and less than 215 Ah, the thickness of the composite phase change layer is 2.3 mm, and the thicknesses of the first thermal insulation layer and the second thermal insulation layer are each independently 1.5 mm to 2 mm; and
(3) a capacity of the battery cell is greater than or equal to 215 Ah and less than 260 Ah, the thickness of the composite phase change layer is 3.3 mm, and the thicknesses of the first thermal insulation layer and the second thermal insulation layer are each independently 1.5 mm to 2 mm.

6. The battery according to claim 3, wherein an atomic percentage of the nickel element in ternary elements of a ternary positive electrode material in the battery cell is greater than or equal to 50% and less than 70%; the thickness of the composite phase change layer is 2.3 mm to 3.3 mm; and the thicknesses of the first thermal insulation layer and the second thermal insulation layer are each independently 1.5 mm to 2.5 mm.

7. The battery according to claim 6, wherein the battery satisfies one of the following conditions:
(1) a capacity of the battery cell is less than 150 Ah, and the thicknesses of the first thermal insulation layer and the second thermal insulation layer are each independently 1.5 mm;
(2) a capacity of the battery cell is greater than or equal to 150 Ah and less than 200 Ah, and the thicknesses of the first thermal insulation layer and the second thermal insulation layer are each independently 1.5 mm to 2 mm; and
(3) a capacity of the battery cell is greater than or equal to 200 Ah and less than 260 Ah, and the thicknesses of the first thermal insulation layer and the second thermal insulation layer are each independently 1.5 mm to 2.5 mm.

8. The battery according to claim 3, wherein an atomic percentage of the nickel element in ternary elements of a ternary positive electrode material in the battery cell is greater than or equal to 70%.

9. The battery according to claim 8, wherein the battery satisfies one of the following conditions:
(1) a capacity of the battery cell is less than 100 Ah, the thickness of the composite phase change layer is 1.5 mm, and the thicknesses of the first thermal insulation layer and the second thermal insulation layer are each independently 1 mm to 1.5 mm;
(2) a capacity of the battery cell is greater than or equal to 100 Ah and less than 120 Ah, the thickness of the composite phase change layer is 2.3 mm to 3.3 mm, and the thicknesses of the first thermal insulation layer and the second thermal insulation layer are each independently 1 mm to 1.5 mm; and
(3) a capacity of the battery cell is greater than or equal to 120 Ah, the thickness of the composite phase change layer is 2.3 mm to 3.3 mm, and the thicknesses of the first thermal insulation layer and the second thermal insulation layer are each independently 2 mm to 2.5 mm.

10. The battery according to claim 1, wherein the battery cell is a lithium iron phosphate battery; the thickness of the composite phase change layer is 1.5 mm to 3.3 mm; and the thicknesses of the first thermal insulation layer and the second thermal insulation layer are each independently 1 mm to 2 mm.

11. The battery according to claim 10, wherein the battery satisfies one of the following conditions:
(1) a capacity of the battery cell is less than 160 Ah, the thickness of the composite phase change layer is 1.5 mm, and the thicknesses of the first thermal insulation layer and the second thermal insulation layer are each independently 1 mm to 1.5 mm;
(2) a capacity of the battery cell is greater than or equal to 160 Ah and less than 260 Ah, the thickness of the composite phase change layer is 1.5 mm to 2.3 mm, and the thicknesses of the first thermal insulation layer and the second thermal insulation layer are each independently 1 mm to 1.5 mm; and
(3) a capacity of the battery cell is greater than or equal to 260 Ah and less than 450 Ah, the thickness of the composite phase change layer is 2.3 mm to 3.3 mm, and the thicknesses of the first thermal insulation layer and the second thermal insulation layer are each independently 1.5 mm to 2 mm.

12. The battery according to claim 1, wherein the battery cell is a sodium-ion battery; the thickness of the composite phase change layer is 1.5 mm to 2.3 mm; and the thicknesses of the first thermal insulation layer and the second thermal insulation layer are each independently 1 mm to 2 mm.

13. The battery according to claim 12, wherein the battery satisfies one of the following conditions:
(1) a capacity of the battery cell is less than 93 Ah, the thickness of the composite phase change layer is 1.5 mm, and the thicknesses of the first thermal insulation layer and the second thermal insulation layer are each independently 1 mm to 1.5 mm;
(2) a capacity of the battery cell is greater than or equal to 93 Ah and less than 117 Ah, and the thicknesses of the first thermal insulation layer and the second thermal insulation layer are each independently 1 mm to 1.5 mm; and
(3) a capacity of the battery cell is greater than or equal to 117 Ah and less than 180 Ah, the thickness of the composite phase change layer is 1.5 mm, and the thicknesses of the first thermal insulation layer and the second thermal insulation layer are each independently 1.5 mm to 2 mm.

14. The battery according to any one of claims 1 to 13, wherein a plurality of battery cells are provided, and the composite thermal insulation pad is disposed between at least two adjacent battery cells.

15. The battery according to claim 14, wherein the composite thermal insulation pad is disposed between large surfaces of two adjacent ones of the battery cells.

16. The battery according to any one of claims 1 to 13, wherein edges of the first thermal insulation layer and the second thermal insulation layer are connected to each other to form an assembly cavity, and the composite phase change layer is located in the assembly cavity.

17. The battery according to claim 16, wherein a protrusion is formed at an edge of at least one side surface of at least one of the first thermal insulation layer and the second thermal insulation layer, and the protrusion encloses at least a portion of the assembly cavity.

18. The battery according to any one of claims 1 to 13, wherein the composite thermal insulation pad further comprises a first encapsulation frame and a second encapsulation frame; the first encapsulation frame is disposed on a side of the first thermal insulation layer; the second encapsulation frame is disposed on a side of the second thermal insulation layer; and the first encapsulation frame cooperates with the second encapsulation frame to fix the first thermal insulation layer, the composite phase change layer, and the second thermal insulation layer.

19. The battery according to claim 18, wherein the first encapsulation frame has a first limiting groove; the second encapsulation frame has a second limiting groove; and the first thermal insulation layer, the composite phase change layer, and the second thermal insulation layer are limited in a limiting space formed by the first limiting groove and the second limiting groove.

20. The battery according to any one of claims 1 to 13, wherein the composite thermal insulation pad satisfies at least one of the following conditions:
(1) the composite thermal insulation pad further comprises a first adhesive layer and a second adhesive layer, the first thermal insulation layer is connected to the encapsulation layer through the first adhesive layer, and the second thermal insulation layer is connected to the encapsulation layer through the second adhesive layer;
(2) the composite thermal insulation pad further comprises a release adhesive layer, the release adhesive layer comprises a third adhesive layer and a release film, the third adhesive layer is disposed on outer surfaces of the first thermal insulation layer and the second thermal insulation layer, and the release film is disposed on an outer surface of the third adhesive layer;
(3) the first thermal insulation layer and the second thermal insulation layer each independently comprise a ceramic material layer;
(4) the encapsulation layer comprises an aluminum-plastic film or a polymer encapsulation film; and
(5) a thickness of the encapsulation layer is 0.1 mm to 0.3 mm.

21. The battery according to any one of claims 1 to 13, wherein the battery cell comprises a housing; and the housing satisfies at least one of the following features:
(1) a wall thickness of the housing is 0.5 mm to 0.8 mm;
(2) the housing is a cuboid housing; and
(3) the housing is an aluminum alloy housing.

22. The battery according to any one of claims 1 to 13, wherein the battery cell comprises a housing; the housing is a cuboid housing; the housing has an opening; an opening direction of the housing is a height direction of the housing; a height of the housing is 80 mm to 210 mm; a length of the housing is 90 mm to 240 mm; and a width of the housing is 20 mm to 80 mm.

23. An electric apparatus, comprising the battery according to any one of claims 1 to 22.
